# EUROPÄISCHE PATENTSCHRIFT

(11) **EP 0 603 907 B1**
(45) Veröffentlichungstag und Bekanntmachung des Hinweises auf die Patenterteilung: **25.11.1998**
(21) Anmeldenummer: 93120849.0
(22) Anmeldetag: 23.12.1993
(51) Int. Cl.: F01N 3/02, B60L 7/02

(54) **Kraftfahrzeug, insbesondere Stadtbus, mit Dieselmotor/Generator-Einheit**
Motor vehicle, particularly city-bus, with a dieselengine/generator unit
Véhicule à moteur, en particulier autobus urbain, avec unité moteur diesel/générateur

(30) Priorität: 23.12.1992 DE 4243990
(43) Veröffentlichungstag der Anmeldung: 29.06.1994
(73) Patentinhaber: Magnet-Motor Gesellschaft für magnetmotorische Technik mbH, D-82319 Starnberg (DE)
(72) Erfinder: Heidelberg, Götz, Dr., D-82319 Starnberg-Percha (DE); Ehrhardt, Peter, Dr., D-81375 München (DE); Weck, Werner, Dr., D-82319 Starnberg (DE)
(74) Vertreter: Drewes, Bernhard

(56) Entgegenhaltungen:
- EP-A- 0 437 266
- EP-A- 0 511 654
- US-A- 4 276 066

## Beschreibung

Die vorliegende Erfindung betrifft ein Kraftfahrzeug, insbesondere einen Stadtbus, nach dem Oberbegriff des Anspruchs 1.

Ein solches Kraftfahrzeug ist aus der EP-A- 0 437 266 bekannt.

Es ist bekannt, bei Fahrzeugen mit Dieselmotor-Antrieb im Abgasstrom des Dieselmotors eine Ruß- oder Partikelfilteranordnung vorzusehen, mit deren Hilfe die Partikel aus dem Abgasstrom herausgefiltert werden. Je nach Belastung des Partikelfilters setzt sich das Filtermaterial nach einer gewissen Zeit immer mehr zu. Dies macht eine Regenerierung erforderlich.

Bekannte Möglichkeiten zur Regeneration von Partikelfiltern für Dieselmotoren sind entweder chemische Reaktionen in Verbindung mit einer Katalysatorbeschichtung des Filtermaterials oder das aktive Abbrennen der Partikel durch Flammenwirkung. Die bekannten Möglichkeiten der Regeneration sind sämtlich mit erheblichen technischen Problemen behaftet, welche die Ausbreitung der Partikelfilter bei Dieselmotoren hemmen.

Die US-A-4,276,066 zeigt einen Rußfilter für Dieselmotoren mit Regenerierung durch Heizwiderstände, die von einer Batterie gespeist werden.

Bei der vorliegenden Erfindung geht es um einen speziellen Typ von Kraftfahrzeug, insbesondere um dieselelektrisch betriebene Busse für den Stadtbetrieb. Bei Kraftfahrzeugen der eingangs genannten Art erfolgt der Antrieb der Räder nicht über einen mechanischen Antriebsstrang zwischen dem Verbrennungsmotor und den Rädern, sondern elektrisch. Der Dieselmotor treibt einen Generator, und die von dem Generator gelieferte elektrische Leistung wird über eine Stromsteuerung auf direkt oder über ein Untersetzungsgetriebe mit den Antriebsrädern gekuppelte Elektromotoren (Fahrmotoren) gegeben.

Derartige Kraftfahrzeuge wurden bereits in verschiedenen Ausgestaltungen vorgeschlagen. Bei Stadtbussen ist es günstig, zusätzlich zu der Verbrennungsmotor/Generator-Einheit einen Schwungradspeicher vorsehen, dem für kurzzeitige Beschleunigungsvorgänge Energie entzogen wird, und in den beim Abbremsen Energie rückgespeichert wird. Der Dieselmotor kann dann bei praktisch konstanter Drehzahl betrieben werden.

Der Erfindung liegt die Aufgabe zugrunde, ein Kraftfahrzeug der eingangs genannten Art anzugeben, bei dem relativ einfach zu realisierende Mittel zum effizienten Regenerieren des Partikelfilters vorgesehen sind.

Gelöst wird diese Aufgabe gemäß Anspruch 1 durch eine elektrische Partikelfilter-Heizvorrichtung zum Regenerieren des Filters, mit einem oder mehreren elektrischen Widerständen, in die während Bremsphasen dann anfallende elektrische Energie einspeisbar ist.

Die elektrische Beheizung des Filters benötigt, damit die Regeneration wirksam durchgeführt werden kann, eine relativ hohe elektrische Leistung in der Größenordnung von 20 bis 50 kW. Während eine solche Leistung bei herkömmlichen Kraftfahrzeugen mit Verbrennungsmotor-Antrieb und üblichem elektrischen Bordnetz kaum bereitgestellt werden kann, sind derartige Leistungen bei Fahrzeugen der hier in Rede stehenden Art direkt verfügbar.

In einer Variante der Erfindung ist vorgesehen, daß die elektrische Leistung zur Beheizung des Partikelfilters dem Generator während des Fahrbetriebs des Fahrzeugs entnommen wird. Würde die Heizung für den Partikelfilter schlagartig bei normalem Fahrbetrieb auf ebener Straße eingeschaltet werden, so ginge die in der oben genannten Größenordnung liegende Leistung augenblicklich den Fahrmotoren ab. Aus diesem Grund sorgt die Steuerung dafür, daß die Heizung des Partikelfilters dann eingeschaltet wird, wenn die Fahrmotoren keine hohe Leistung benötigen. Dies ist speziell bei Gefällestrecken und sich verlangsamendem Fahrzeug der Fall.

Eine Alternative besteht darin, die elektrische Leistung zur Beheizung des Partikelfilters dem Generator während des Fahrzeugstillstands zu entnehmen. Bekanntlich muß die Regeneration des Partikelfilters in bestimmten Intervallen vorgenommen werden, abhängig von dem Ausmaß der Verschmutzung des Filtermaterials. Die Steuerung kann feststellen, ob eine Regeneration erforderlich ist. Ist dies der Fall, und befindet sich das Fahrzeug bei laufendem Verbrennungsmotor im Stillstand, so kann die Steuerung die Heizung für den Partikelfilter einschalten.

Das Verbrennen der Rußpartikel erfordert die Zufuhr von Frischluft. Hierzu sieht die Erfindung in einer Ausführungsform ein elektrisches Gebläse für die Zufuhr von Frischluft zu dem Partikelfilter während der elektrischen Beheizung des Filters vor. Das Gebläse kann ein von einem kleinen Elektromotor betriebener Ventilator sein, der an das Gehäuse des Partikelfilters gekoppelt ist. Vorzugsweise wird das Gebläse durch den Generator mit elektrischer Leistung versorgt.

Gemäß der Erfindung ist vorgesehen, daß der Partikelfilter während der Bremsphasen des Fahrzeugs elektrisch beheizt wird und die hierfür erforderliche elektrische Leistung von den Fahrmotoren (Elektromotoren) aufgebracht wird, die während der Bremsphasen des Fahrzeugs generatorisch arbeiten.

Bei Fahrzeugen mit elektromotorischem Antrieb kann man den (die) Motor(en) während der Bremsphasen als Generator betreiben, um die Bremsung durchzuführen oder die (mechanische) Bremsung zu unterstützen. Die im Generatorbetrieb der Antriebsmotoren anfallende elektrische Energie wird üblicherweise über elektrische Bremswiderstände vernichtet. Bekannt ist auch, diese Bremsenergie für Heizzwecke einzusetzen.

Die vorliegende Erfindung nutzt die in den Bremsphasen anfallende elektrische Bremsenergie in besonders vorteilhafter Weise zum Beheizen des Partikelfilters. Da praktisch bei jedem Fahrzeug relativ häufig Bremsphasen stattfinden, läßt sich bei dem erfindungsgemäßen Kraftfahrzeug die Regeneration des Partikelfilters praktisch ohne zusätzlichen Energieaufwand erreichen. Diese Art der Beheizung des Partikelfilters ist damit ökonomisch und ökologisch äußerst vorteilhaft.

Wie oben erwähnt, benötigt der Regenerationsvorgang die Zufuhr von Frischluft, die gemäß der oben angegebenen Variante mit Hilfe eines Gebläses erreicht wird. Alternativ (oder zusätzlich) sieht die Erfindung vor, daß während der Bremsphasen des Fahrzeugs und bei der elektrischen Beheizung des Partikelfilters der Generator den Dieselmotor motorisch antreibt, wobei der Generator durch die dann generatorisch arbeitenden Fahrmotoren elektrisch gespeist wird und der Dieselmotor bei abgeschalteter Kraftstoffzufuhr als Frischluftkompressor dem Partikelfilter Frischluft zuführt.

Während der Bremsphasen wird keine Antriebsenergie benötigt. Folglich wird während der Bremsphasen die Kraftstoffzufuhr zu dem Dieselmotor abgeschaltet. Die nun generatorisch arbeitenden Fahrmotoren liefern elektrische Leistung, die zumindest teilweise dem Generator zugeführt wird, der dann als Motor arbeitet und den Dieselmotor antreibt. Der Dieselmotor arbeitet also nun als Kompressor, und der Kompressor dient zum Einblasen von Frischluft in den Partikelfilter während der Regenerationsphase des Filters. Diese Lösung ist besonders elegant, weil praktisch keine zusätzlichen mechanischen Strömungswege für die Zuleitung von Frischluft zu dem Partikelfilter notwendig sind. Die Frischluftzufuhr erfolgt über den Lufteinlaßweg, die Zylinder des Dieselmotors und die Auspuffanlage bis zu dem Partikelfilter hin.

Für die spezielle Ausgestaltung der elektrischen Heizung des Partikelfilters gibt es mehrere Möglichkeiten. Erfindungsgemäß ist die Heizung in Form von integrierten Heizwiderstandsstäben oder -patronen oder in Form eines oder mehrerer Widerstandsgitter ausgeführt. Diese Elemente befinden sich direkt im Inneren des Filtermaterials in dem Gehäuse des Partikelfilters. Hierdurch wird eine optimale Energieausnutzung erreicht (im Gegensatz zu einer lediglich von außen her erfolgenden Beheizung des Gehäuses des Partikelfilters).

Das hier in Rede stehende Kraftfahrzeug besitzt zwischen der Stromsteuerung des Generators und den einzelnen Stromsteuerungen der Fahrmotoren einen elektrischen Leitungsstrang, über den die elektrische Leistung fließt, z.B. einen Gleichspannungszwischenkreis. An diesen Leitungsstrang ist erfindungsgemäß die elektrische Heizeinrichtung für den Partikelfilter über einen oder mehrere Leistungsschalter angeschlossen. Der Leistungsschalter umfaßt in üblicher Weise elektronische Leistungsbauelemente wie Transistoren, Thyristoren und dergleichen. Üblicherweise befindet sich zwischen dem Generator und den einzelnen Fahrmotoren ein Umrichtersystem (Stromsteuerungen), das den von dem Generator gelieferten Wechselstrom in einen Gleichstrom (Gleichspannungszwischenkreis) umsetzt, von dem aus wiederum der Wechselstrom für die Fahrmotoren erzeugt wird. Das Ankoppeln an den Leitungsstrang des Gleichspannungszwischenkreises ermöglicht eine relativ einfache Steuerung und Regelung der elektrischen Heizung für den Partikelfilter.

Erfindungsgemäß ist bevorzugt vorgesehen, daß die elektrische Heizleistung elektronisch geregelt wird und die elektronische Regelung die Temperatur im Filter während der Regeneration auf Werte von mindestens 25°C oberhalb der Entzündungstemperatur der im Filter absorbierten Partikel und gleichzeitig auf Werte von mindestens 50°C unterhalb der höchsten zulässigen Betriebstemperatur des Filters regelt.

Durch eine solche Regelung erreicht man eine äußerst effiziente Regeneration des Filtermaterials bei gleichzeitiger Einhaltung der Sicherheitsvorschriften. Eine solche Regelung ist leichter zu realisieren, als eine entsprechende Regelung bei Regeneration mit einem Flammen-Brenner. Damit ist auch die Energieausnutzung bei der Regeneration des Filters wesentlich effizienter.

Bekanntlich muß ein Rußfilter in bestimmten zeitlichen Abständen gereinigt werden, wobei diese zeitlichen Abstände von dem Verschmutzungszustand des Filters abhängen. Außerdem muß die Dauer des Regenerationsvorgangs abgestimmt werden auf den erreichten Reinigungsgrad des Filtermaterials. Hierzu sieht die Erfindung vor, daß als Steuergröße für die Regenerationsdauer, d.h. die Beheizungszeit des Partikelfilters, der aktuelle Filterzustand mit Hilfe der Messung des Gegendrucks im Abgassystem des Dieselmotors während des Regenerationsvorgangs verwendet wird.

Die Regenerierung des Partikelfilters hängt nicht nur von der Regenerationszeit ab, sondern auch von anderen Faktoren, beispielsweise dem speziellen Aufbau und dem Volumen des Filters, der zugeführten elektrischen Leistung und der zugeführten Frischluftmenge. Aus diesem Grund steuert erfindungsgemäß die Steuerung während des Regenerationsvorgangs die dem Partikelfilter zugeführte Frischluftmenge.

Bei den Kraftfahrzeugen der hier in Rede stehenden Art befindet sich, wie oben ausgeführt ist, zwischen dem Generator einerseits und den Fahrmotoren andererseits eine Stromsteuerung in Form von Umrichtern, deren Elemente ihrerseits von einer Prozessorsteuerung gesteuert werden, welche auch andere Steuerungsaufgaben wahrnimmt. Aus diesem Grund ist die erfindungsgemäße Regelung der elektrischen Heizleistung in die Prozessorsteuerung des dieselelektrischen Antriebs integriert.

Die Regeneration des Filters erfolgt in Abhängigkeit vom Grad der Verschmutzung oder Zusetzung des Filters mit Partikeln. Erfindungsgemäß sorgt für eine rechtzeitige Regeneration des Partikelfilters eine elektronische Steuerung, welche die elektrische Beheizung des Partikelfilters aktiviert. Diese elektronische Steuerung errechnet die notwendigen Regenerationszeiten und -abstände aus aufgezeichneten Belastungskollektiven des Dieselmotors. Während der Grad der Zusetzung des Filters ermittelt werden kann durch Messen des Differenzdrucks vor und hinter dem Partikelfilter oder auch durch Messung der Filtertemperatur, lassen sich bei vorhandener Prozessorsteuerung die "Belastungskollektive" des Dieselmotors aufzeichnen. Hierzu sammelt die Elektronik Meßwerte, wie die Drehzahl des Generators und dessen Leistung (Drehmoment). Diese Daten werden laufend aktualisiert und ausgewertet und mit vorgespeicherten Erfahrungswerten verglichen, um Aufschluß über die Zusetzung des Filters zu erhalten. Ist das Filtermaterial bis zu einem gewissen Grad zugesetzt, wird bei nächster Gelegenheit, beispielsweise beim nächsten Bremsvorgang, eine Regeneration des Partikelfilters veranlaßt.

Als Steuerparameter der Aktivierungsschaltung für die Heizung des Partikelfilters wird der Gegendruck im Abgassystem des Dieselmotors während des Normalbetriebs gemessen. Steigt dieser Gegendruck auf einen Wert an, der über einem Schwellenwert liegt, so erfolgt die Aktivierung der Heizvorrichtung.

Durch eine Langzeitüberwachung erhält man Aufschluß über die mittleren Regenerationsintervalle und Regenerationszeiten. Die gemessenen Langzeitwerte können von der elektronischen Steuerung umgesetzt werden in aktuelle Aktivierungszeiten für die Heizvorrichtung des Filters.

Man kann eine separate Aktivierungsschaltung vorsehen, die die Meßwerte z.B. bezüglich der Eintrittstemperatur und der Austrittstemperatur des Abgases am Partikelfilter und den Abgasgegendruck erfaßt und auswertet; vorzugsweise ist diese Aktivierungsschaltung jedoch Bestandteil der sogenannten multiplen Prozessorsteuerung, die neben anderen Aufgaben auch die Aktivierung der Regenerationseinrichtung für den Partikelfilter übernimmt.

Wie oben erläutert wurde, ist es ein Merkmal der Erfindung, die in den Bremsphasen anfallende Energie als Heizenergie für die Beheizung des Partikelfilters auszunutzen. Wenn man von einem Fahrzeug der hier in Rede stehenden Art ausgeht und dabei annimmt, daß zur Vernichtung nicht benötigter Bremsenergie spezielle Bremswiderstände vorhanden sind, so werden bevorzugt die Bremswiderstände direkt als Heizwiderstände zum Heizen des Partikelfilters verwendet. Selbstverständlich müssen diese Bremswiderstände dann so dimensioniert sein, daß einerseits die gewünschte Heizleistung erreicht und andererseits die höchstzulässige Betriebstemperatur nicht überschritten wird bzw. beim normalen Bremsen die Regelung in der Weise erfolgt, daß keine unerwünschte Filterregeneration stattfindet, der Filter also nicht unnötig beeinträchtigt wird. Auch kann jegliche Bremsenergie in den Partikelfilter geleitet und so geregelt werden, daß sie dort zum dauernden Regenerieren des Filtermaterials dient. Ob die Regeneration des Filters nur bei Erreichen eines Mindest-Verschmutzungsgrades oder bei jeder möglichen Gelegenheit durchgeführt wird, hängt vom Filtertyp und material ab.

Wenn in einer Ausführungsform der Generator direkt in den Dieselmotor integriert ist und der Läufer des Generators mit der Drehzahl des Dieselmotors betrieben wird, und/oder wenn die Fahrmotoren in der Radnabe oder in der Nähe des Rades angeordnet sind und die Räder einzeln von jeweils einem Elektro-Fahrmotor angetrieben werden, so dient der Läufer des Generators gleichzeitig als Schwungscheibe und kann somit die übliche Schwungscheibe des Motors ersetzen (kleine, integrierte Bauweise der Verbrennungsmotor-Generator-Einheit), während durch die genannte radnahe Anordnung der Fahrmotoren eine kompakte Konstruktion möglich ist, wobei zwischen dem jeweiligen Motor und dem Rad noch ein Untersetzungsgetriebe vorhanden sein kann.

Zum Regenerieren benötigt man eine Mindest-Temperatur von etwa 600°C und eine Mindest-Heizzeit von ca. 10 Minuten. Da die Bremsphasen üblicherweise kürzer ausfallen, sieht die Erfindung eine Stückelung vor, so daß einzelne Teil intervalle der Regenerationsphase mit jeweils einer Bremsphase zusammenfallen.

Bei der Regenerierung des Partikelfilters wird zumindest ein Teil der Heizenergie aus Bremsenergie gewonnen. Der Rest kann aus einer anderen Energiequelle, z.B. dem Generator, stammen.

Bei dem hier speziell in Rede stehenden Fahrzeugtyp ist es zweckmäßig, die als Fahrmotoren dienenden Elektromotoren während Bremsphasen generatorisch zu betreiben. Die dann beim Bremsen anfallende elektrische Energie wird über elektrische Widerstände in Wärmeenergie umgesetzt. Diese Widerstände müssen die anfallende Wärmeenergie nach außen abgeben können. Durch die Erfindung ist es möglich, daß mindestens ein Teil dieser während der Bremsphasen anfallenden Wärmeenergie über ein oder mehrere Widerstandselemente abgeführt wird, welche sich in dem Partikelfilter befinden. Dadurch kann man auf spezielle "Bremswiderstände" verzichten bzw. diese Bremswiderstände kleiner dimensionieren. Ein Großteil der Bremsenergie wird zur Regeneration des Partikelfilters genutzt.

Ein großer Vorteil dieser Maßnahme besteht darin, daß die Heizwiderstände sich im Abgasstrom des Dieselmotors befinden. Die Abgase haben abhängig von der Motorlast eine Temperatur von beispielsweise 100 ... 200°C. Damit werden die im Abgasstrom des Motors liegenden elektrischen Widerstände vom Abgasstrom des Motors gekühlt.

Besonders vorteilhaft ist es, die Bremswiderstände als Heizwiderstände für den Partikelfilter auszubilden.

Im folgenden wird ein Ausführungsbeispiel der Erfindung anhand der Zeichnung näher erläutert. Es zeigen:
- Fig. 1: Ein Blockschaltbild eines Kraftfahrzeugs mit Dieselmotor/Generator-Einheit und einem im Abgasstrom zu diesem Motor befindlichen, elektrisch beheizten Partikelfilter; und
- Fig. 2: eine Skizze mit teilweise schematisiertem Blockschaltbild eines elektrisch beheizten Partikelfilters.

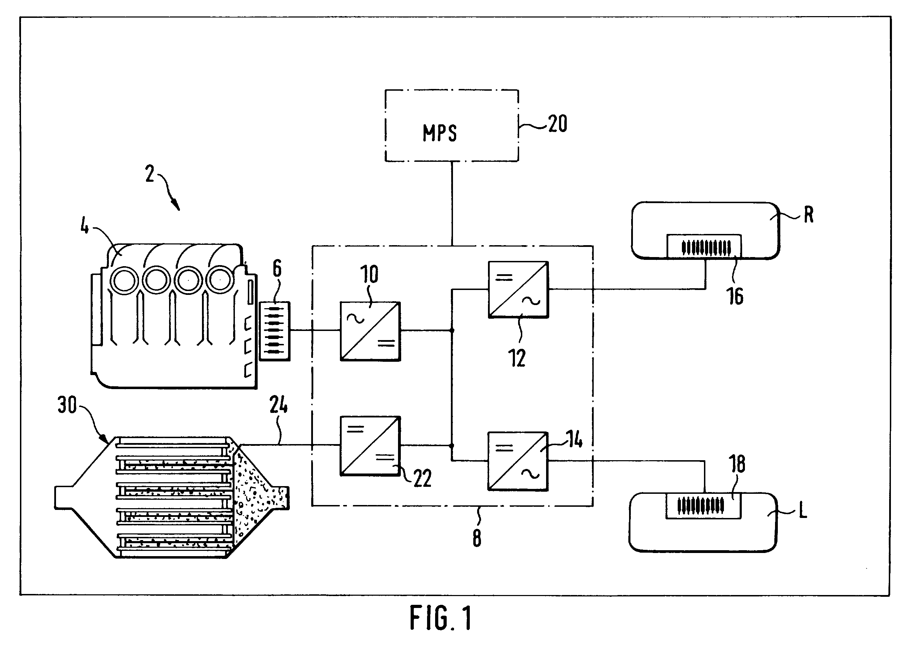

Fig. 1 zeigt die hier wesentlichen Merkmale eines Kraftfahrzeugs mit einer Verbrennungsmotor-Generator-Einheit 2, die einen Dieselmotor 4 und einen Generator 6 enthält, dessen Läufer direkt mit der Kurbelwelle des Dieselmotors gekoppelt ist.

Der Generator liefert einen Wechselstrom an eine Stromsteuerung 8, die einen generatorseitigen Umrichter 10 und an dessen Ausgang angeschlossene Umrichter 12 und 14 beinhaltet, deren Ausgänge mit Elektro-Fahrmotoren 16 und 18 verbunden sind, die radnah an einem angetriebenen rechten Rad R bzw. einem angetriebenen linken Rad L des Fahrzeugs verbunden sind.

Die Umrichteranordnung, bestehend aus dem generatorseitigen Umrichter 10 und den Umrichtern 12 und 14, enthält in an sich bekannter Weise elektronische Leistungsbauelemente, z.B. Thyristoren, deren Steuereingänge Steuersignale von einer sogenannten multiplen Prozessorsteuerung (MPS) 20 erhalten. Die multiple Prozessorsteuerung 20 empfängt von hier nicht dargestellten Sensoren Informationen über die Drehzahl und das Drehmoment der Verbrennungsmotor-Generator-Einheit 2, Informationen über die Drehzahlen der angetriebenen Räder R und L, sowie weitere Informationen, beispielsweise Information über einen Fahrwunsch, der von dem Fahrer des Fahrzeugs beispielsweise über einen Fahrhebel signalisiert wird. Abhängig von derartigen Informationssignalen steuert die multiple Prozessorsteuerung 20 die Stromsteuerung 8 so, daß den angetriebenen Rädern R und L des Fahrzeugs die benötigte elektrische Leistung zugeführt wird.

Wenn das Fahrzeug abbremst, können die Fahrmotoren 16 und 18 als Generatoren arbeiten, wobei die Stromsteuerung 8 den von den Fahrmotoren gelieferten Wechselstrom umsetzt in einen Antriebs-Wechselstrom für den Generator 6 oder umsetzt in anderweitig genutzte oder gespeicherte Energie.

Der bisher beschriebene Aufbau des Kraftfahrzeugs ist im Prinzip bekannt. Bei dem Verbrennungsmotor 4 handelt es sich um einen Dieselmotor, in dessen Abgasstrom sich ein Partikelfilter oder Rußfilter 30 befindet. Derartige Partikelfilter sind an sich bekannt. Sie müssen von Zeit zu Zeit durch Beheizung von den das Filtermaterial zusetzenden Partikeln befreit werden. Durch die Beheizung werden die Partikel unschädlich verbrannt.

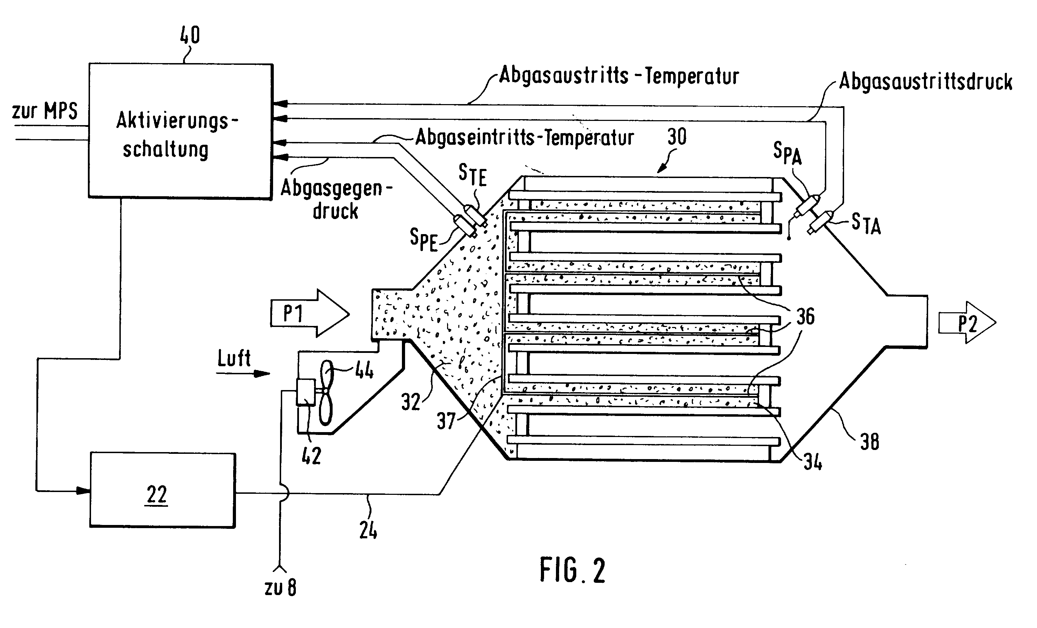

Wie aus Fig. 2 hervorgeht, besteht der Partikelfilter 30 aus einem Gehäuse 38, in welchem sich eine Filterpackung 32 befindet. Ein mit Rußpartikeln beladener Abgasstrom gelangt gemäß Pfeil P1 von links nach rechts in das Gehäuse 38 und trifft dort auf das Material der Filterpackung 32. Die Filterpackung 32 besetzt den Eintrittsbereich des Gehäuses 38 sowie im mittleren Bereich des Gehäuses ausgebildete Kammern 34. Die Kammern sind durch gelochte Blechelemente gebildet. Nachdem die mit dem Abgasstrom mitgeführten Rußteilchen sich in der Filterpackung 32 festgesetzt haben, verläßt der gereinigte Abgasstrom entsprechend dem Pfeil P2 den Partikelfilter 30.

In den einzelnen Kammern 34 befinden sich Heizwiderstandsdrähte 36, die stromaufwärts über eine als Gitter ausgebildete Heizwiderstandsanordnung 37 verbunden sind, die ihrerseits über eine Leitung 24 mit einem Leistungsschalter 22 verbunden ist.

Im Eintrittsbereich des Partikelfilters 30 befinden sich ein Sensor S_{PE} zum Messen des Abgasgegendrucks und ein Sensor S_{TE} zum Messen der Abgaseintrittstemperatur. Im Austrittsbereich auf der rechten Seite in **Fig. 2** befinden sich in dem Partikelfilter 30 ein Sensor S_{TA} zum Messen der Abgasaustrittstemperatur und ein Sensor S_{PA} zum Messen des Drucks im Austrittsbereich des Filters. Die Ausgangssignale der genannten Sensoren gelangen zu einer Aktivierungsschaltung 40, welche die Meßwerte auswertet und gegebenenfalls durch Aktivieren des Leistungschalters 22 die Heizwiderstände 36, 37 einschaltet, um die in dem Filtermaterial der Filterpackung 32 festsitzenden Partikel abzubrennen. Die Aktivierungsschaltung ist Bestandteil der oben erläuterten multiplen Prozessorsteuerung oder ist- wie in **Fig. 2**, dargestellt - als getrennte Schaltung ausgebildet.

Erhöht sich z.B. der Abgasgegendruck im Laufe der Zeit derart, daß er einen in der Aktivierungsschaltung 40 voreingestellten Schwellenwert übersteigt, so bedeutet dies, daß die Filterpackung 32 durch Rußpartikel zugesetzt ist und eine Regeneration erforderlich ist. Dementsprechend veranlaßt die Aktivierungsschaltung 40 den Leistungsschalter (dieser besteht aus einer Reihe von elektronischen Schaltelementen und ist gemäß **Fig. 1** an den elektrischen Leitungsstrang für die Fahrmotoren angeschlossen) zur Zuschaltung der Heizwiderstände 36, 37 auf den Zwischenkreis innerhalb der Stromsteuerung 8. Die Dauer der so erfolgenden Beheizung des Partikelfilters hängt von dem Reinigungszustand des Partikelfilters ab. Dieser Reinigungszustand wird beispielsweise wieder über den gemessenen Abgasgegendruck ermittelt. Sinkt dieser Abgasgegendruck unter einen gewissen Wert, so bedeutet dies, daß das Filtermaterial im wesentlichen gereinigt ist, so daß die Aktivierungsschaltung 40 den Leistungsschalter 22 veranlaßt, die Heizwiderstände 36, 37 nicht weiter mit Strom zu speisen.

Für den Verbrennungsvorgang bzw. das Ausglühen der zu beseitigenden Rußpartikel im Inneren des Partikelfilters 30 ist die Zufuhr von Frischluft erforderlich. Hierzu ist an das Gehäuse 38 des Partikelfilters über eine nicht dargestellte Zutrittsöffnung ein Gebläse angeschlossen, welches gemäß **Fig. 2** aus einem Elektromotor 42 und einem mit dessen Ausgangswelle gekoppelten Ventilator 44 besteht. Der Ventilator 44 drückt Frischluft durch das Innere des Partikelfilters 30, so lange die elektrischen Heizwiderstände 36 und 37 über den Leistungsschalter 22 mit Strom gespeist werden.

Der in **Fig. 2** dargestellte Partikelfilter befindet sich in der Auspuffanlage des Dieselmotors. Wie erwähnt wurde, durchströmen die Abgase des Dieselmotors den Partikelfilter von links nach rechts und werden dabei gereinigt. Die Eintrittsseite des Partikelfilters 30 steht somit über eine (nicht dargestellte) Rohrleitung in Verbindung mit dem Auspuffkrümmer des Dieselmotors.

Wenn der Dieselmotor im Normalbetrieb arbeitet, wird seinen Zylindern Kraftstoff zugemessen, der sich mit der ebenfalls zugemessenen Luft in dem Zylinder vermischt, bevor sich dieses Gemisch entzündet.

Das oben beschriebene Fahrzeug mit der Heizvorrichtung für den Partikelfilter kann so betrieben werden, daß der Partikelfilter praktisch zu jeder beliebigen Zeit regeneriert werden kann, wozu die Beheizung von der Aktivierungsschaltung 40 eingeschaltet und nach beendeter Regenerierung wieder ausgeschaltet wird. Zu bevorzugen ist aber die Aktivierung der Beheizung des Partikelfilters nur unter bestimmten Bedingungen. Eine Bedingung kann sein, daß das Fahrzeug läuft, jedoch nicht beschleunigt wird. Hierdurch wird erreicht, daß dem Beschleunigungsvorgang nicht die benötigte Leistung entzogen wird.

Eine weitere Bedingung kann sein, daß die Regenerierung des Partikelfilters während der Stillstandzeit des Fahrzeugs erfolgt. Damit kann praktisch die gesamte Generatorleistung zum Regenerieren des Partikelfilters zur Verfügung gestellt werden (die Heizleistung beträgt 20 bis 50 kW).

Besonders bevorzugt ist jedoch das Einleiten der Regenerierung während der Bremsphasen des Fahrzeugs. Wenn das Fahrzeug beispielsweise ein Stadtbus ist und sich der Bus auf einer Gefällestrecke befindet oder vor einer Ampel oder einer Haltestelle abgebremst werden muß, so werden - wie oben im einzelnen ausgeführt ist - die Fahrmotoren 16 und 18 als Generatoren betrieben. Hierdurch werden die sonst angetriebenen Räder R und L abgebremst. Die dabei gewonnene elektrische Energie wird dem Generator 6 der Verbrennungsmotor-Generator-Einheit 2 zugeleitet. Der direkt mit der Kurbelwelle des Dieselmotors gekoppelte Läufer des Generators 6 wird dann motorisch betrieben und dreht also den Dieselmotor. Dessen Kraftstoffzufuhr wird während dieses Bremsvorgangs abgeschaltet, so daß sich in den Zylindern kein Gemisch bildet, sondern lediglich Frischluft in die Zylinder gelangt. Diese Frischluft wird durch den dann von dem Generator 6 angetriebenen Dieselmotor über den Auspuff bis zu dem Partikelfilter 30 gepumpt, wo die Frischluft gemäß dem dortigen Pfeil P1 in das Innere des Gehäuses 38 des Partikelfilters 30 gelangt.

Bei den üblichen Kraftfahrzeugen fallen derart zahlreiche und umfangreiche Bremsvorgänge an, daß die oben geschilderte Frischluftzufuhr über den dann als Kompressor arbeitenden Dieselmotor ausreicht und kein Zusatzgebläse wie das unten in **Fig. 2** gezeigte Gebläse 42, 44 notwendig ist.

Der in **Fig. 1** schematisch dargestellte Leistungsschalter 22, der über das Stromkabel 24 mit der Heizwiderstandsanordnung in dem Partikelfilter 30 verbunden ist, arbeitet in Verbindung mit der MPS 20 als elektronische Regeleinrichtung, um die Heizleistung auf solche Werte einzustellen, die eine optimale Regenerierung gewährleisten. Durch Temperaturmessung wird erreicht, daß die Temperatur etwa 25°C oberhalb der Entzündungstemperatur der Partikel liegt, jedoch einen Sicherheitsabstand von beispielsweise 50°C von der maximal zulässigen Betriebstemperatur des Filters hat. Die für diesen Regelvorgang notwendige Information bezieht die MPS 20 von den in **Fig. 2** dargestellten Sensoren S_{TE} und S_{TA}. Denkbar ist eine konstante Frischluftzufuhr bei geregelter Stromstärke in der Heizwiderstandsanordnung 36, 37. Denkbar ist außerdem eine konstante Stromzufuhr bei geregelter Frischluftzufuhr. Eine Mischform ist ebenfalls möglich.

## Patentansprüche

1. Kraftfahrzeug, insbesondere Stadtbus, mit einer Verbrennungsmotor/Generator-Einheit (2), einer Steuerung (20, 8) und einem oder mehreren Elektromotoren (16, 18), die als Fahrmotoren zum Antreiben der Räder (R, L) dienen und während Bremsphasen generatorisch betreibbar sind, wobei der Verbrennungsmotor als Dieselmotor (4) ausgebildet ist, in dessen Abgasstrom ein Partikelfilter (30) liegt,
**gekennzeichnet durch**
eine elektrische Partikelfilter-Heizvorrichtung (22, 24, 36, 37, 40) zum Regenerieren des Partikelfilters (30), mit einem oder mehreren elektrischen Widerständen (36), in die während Bremsphasen dann anfallende elektrische Energie einspeisbar ist.

2. Fahrzeug nach Anspruch 1,
**dadurch gekennzeichnet,**
daß zur Beheizung des Partikelfilters dem Generator (6) während des Fahrbetriebs des Fahrzeugs elektrische Leistung entnommen wird.

3. Fahrzeug nach Anspruch 1,
**dadurch gekennzeichnet,**
daß zur Beheizung des Partikelfilters (30) dem Generator (6) während des Fahrzeugstillstands elektrische Leistung entnommen wird.

4. Fahrzeug nach einem der Ansprüche 1 bis 3,
**gekennzeichnet durch**
ein elektrisches Gebläse (42, 44) für die Zufuhr von Frischluft zu dem Partikelfilter (30) während der elektrischen Beheizung des Partikelfilters.

5. Fahrzeug nach Anspruch 4,
**dadurch gekennzeichnet**,
daß das elektrische Gebläse (42, 44) durch den Generator (6) mit elektrischer Leistung versorgt wird.

6. Fahrzeug nach einem der Ansprüche 1 bis 5,
**dadurch gekennzeichnet**,
daß während einer Bremsphase des Fahrzeugs und bei der elektrischen Beheizung des Partikelfilters (30) der Generator im motorischen Betrieb den Dieselmotor (4) antreibt, wobei der Generator (6) durch den (die) gleichzeitig generatorisch arbeitenden Fahrmotor(en) (16, 18) elektrisch versorgt wird und der Dieselmotor (4) dabei ohne Kraftstoffzufuhr als Frischluftkompressor die Luftzufuhr zu dem Partikelfilter (30) erzeugt.

7. Fahrzeug nach mindestens einem der Ansprüche 1 bis 6,
**dadurch gekennzeichnet**,
daß die elektrische Beheizung des Partikelfilters (30) durch in den Filter integrierte Heizwiderstandsstäbe (36) oder -patronen und/oder Widerstandsgitter (37) ausgeführt ist.

8. Fahrzeug nach mindestens einem der Ansprüche 1 bis 7,
**dadurch gekennzeichnet**,
daß die Einrichtung zum elektrischen Beheizen des Partikelfilters (30) mittels Leistungsschaltern (22) an den elektrischen Leitungsstrang für den oder die Fahrmotor(en) (16, 18) geschaltet wird.

9. Fahrzeug nach mindestens einem der Ansprüche 1 bis 8,
**dadurch gekennzeichnet**,
daß die elektrische Heizleistung der Widerstände elektronisch geregelt wird und die elektronische Regelung die Tempertaur im Filter (30) während der Regeneration auf Werte von mindestens 25°C oberhalb der Entzündungstemperatur der in dem Filter absorbierten Partikel und gleichzeitig auf Werte von mindestens 50°C unterhalb der höchsten zulässigen Betriebstemperatur des Filters (30) regelt.

10. Fahrzeug nach Anspruch 9,
**dadurch gekennzeichnet**,
daß als Steuergröße für die Regenerationsdauer, d. h. die Beheizungszeit des Partikelfilters (30), der aktuelle Filterzustand mittels Messung des Gegendrucks im Abgassystem des Dieselmotors (4) während des Regenerationsvorgangs verwendet wird.

11. Fahrzeug nach Anspruch 9 und 10,
**dadurch gekennzeichnet**,
daß die elektronische Heizleistungsregelung die während des Regenerationsvorgangs in den Partikelfilter (30) geführte Frischluftmenge regelt.

12. Fahrzeug nach mindestens einem der Ansprüche 9 bis 11,
**dadurch gekennzeichnet**,
daß die elektronische Regelung der elektrischen Heizleistung in die Prozessorsteuerung (20) des dieselelektrischen Antriebs integriert ist.

13. Fahrzeug nach mindestens einem der Ansprüche 1 bis 12,
**dadurch gekennzeichnet**,
daß die elektrische Heizung des Partikelfilters (30), d. h. die Regeneration, in Abhängigkeit vom Grad der Zusetzung des Filters (30) mit Partikeln aktiviert wird.

14. Fahrzeug nach mindestens einem der Ansprüche 1 bis 13,
**dadurch gekennzeichnet**,
daß die Aktivierung der elektrischen Beheizung des Partikelfilters (30) durch eine elektronische Steuerung (40) durchgeführt wird.

15. Fahrzeug nach Anspruch 14,
**dadurch gekennzeichnet**,
daß die elektronische Steuerung (40) die notwendigen Regenerationszeiten und -intervalle aus den aufgezeichneten Belastungskollektiven des Dieselmotors (4) errechnet und steuert.

16. Fahrzeug nach Anspruch 14 und 15,
**dadurch gekennzeichnet**,
daß als Steuerparameter der Elektronik (40) für die Aktivierung der elektrischen Partikelfilterheizung der Gegendruck im Abgassystem des Dieselmotors im Fahrbetrieb verwendet wird.

17. Fahrzeug nach mindestens einem der Ansprüche 14 bis 16,
**dadurch gekennzeichnet**,
daß die elektronische Steuerng die Regenerationszeiten und -intervalle des Partikelfiltes (30) langzeitüberwacht.

18. Fahrzeug nach mindestens einem der Ansprüche 14 bis 17,
**dadurch gekennzeichnet**,
daß die Aktivierungssteuerung (40) in die Prozessorsteuerung (20) des dieselelektrischen Fahrzeugantriebs integriert ist.

19. Fahrzeug nach mindestens einem der Ansprüche 1 bis 18,
**dadurch gekennzeichnet**,
daß die elektrische Heizung (36, 37) des Partikelfilters (30) als Belastungselement für die elektrische Bremse des Fahrzeugs verwendet wird.

20. Fahrzeug nach mindestens einem der Ansprüche 1 bis 19,
**dadurch gekennzeichnet**,
daß der Generator (6) direkt an den Dieselmotor (4) integriert ist und der Läufer des Generators (6) mit der Drehzahl des Dieselmotors betrieben wird.

21. Fahrzeug nach mindestens einem der Ansprüche 1 bis 20,
**dadurch gekennzeichnet**,
daß die Fahrmotoren (16, 18) in der Radnabe oder radnah angeordnet sind und die Räder einzeln von jeweils einem Motor angetrieben werden.

22. Fahrzeug nach einem der Ansprüche 1 bis 21,
**dadurch gekennzeichnet**,
daß eine Steuerung die Regenerationsphase von z. B. 10 Minuten derart stückelt, daß einzelne Teilintervalle einer Regenerationsphase mit jeweils einer Bremsphase zusammenfallen.

## Claims

1. A motor vehicle, in particular a city bus, comprising a combustion engine/generator unit (2), a control (20, 8) and one or more electric motors (16, 18) serving as driving motors for driving the wheels (R, L) and adapted to be operated in the generator mode during braking phases, the combustion engine being in the form of a diesel engine (4) having a particle filter (30) disposed in the exhaust gas flow thereof,
characterized by an electric particle filter heating device (22, 24, 36, 37, 40) for regenerating the particle filter (30), comprising one or more electric resistors (36) into which electrical energy arising during braking phases can be fed during such braking phases.

2. The vehicle of claim 1,
characterized in that for heating the particle filter, electrical energy is withdrawn from the generator (6) during the driving operation of the vehicle.

3. The vehicle of claim 1,
characterized in that for heating the particle filter (30), electrical energy is withdrawn from the generator (6) during standstill of the vehicle.

4. The vehicle of any of claims 1 to 3,
characterized by an electric blower (42, 44) for supplying fresh air to the particle filter (30) while the particle filter is being electrically heated.

5. The vehicle of claim 4,
characterized in that the electric blower (42, 44) is fed with electrical energy by the generator (6).

6. The vehicle of any of claims 1 to 5,
characterized in that during a braking phase of the vehicle and during electric heating of the particle filter (30), the generator drives the diesel engine (4) in the motor mode, with the generator (6) being fed with electricity by the driving motor(s) (16, 18) operated at the same time in the generator mode, and the diesel engine (4), which then operates as a fresh air compressor, providing the fresh air supply to the particle filter (30) without fuel supply.

7. The vehicle of at least one of claims 1 to 6,
characterized in that electric heating of the particle filter (30) is effected by heating resistance rods (36) or cartridges and/or resistance grids integrated in said filter.

8. The vehicle of at least one of claims 1 to 7,
characterized in that the means for electrically heating the particle filter (30) is connected by means of power switches (22) to the electric cable assembly for the driving motor(s) (16, 18).

9. The vehicle of at least one of claims 1 to 8,
characterized in that the electrical heating capacity of the resistors is regulated electronically, and the electronic regulation regulates the temperature in filter (30) during regeneration to values of at least 25°C above the ignition temperature of the particles absorbed in the filter and at the same time to values of at least 50°C below the maximum admissible operating temperature of the filter (30).

10. The vehicle of claim 9,
characterized in that as control quantity for the duration of the regeneration, i.e. the heating time of the particle filter (30), the current filter condition is used by way of a measurement of the counterpressure in the exhaust system of the diesel engine (4) during the regeneration operation.

11. The vehicle of claims 9 and 10,
characterized in that the electronic heating power regulation regulates the amount of fresh air supplied to the particle filter (30) during the regeneration operation.

12. The vehicle of at least one of claims 9 to 11,
characterized in that the electronic regulation of the electric heating power is integrated in the processor control (20) of the diesel-electric drive.

13. The vehicle of at least one of claims 1 to 12,
characterized in that the electric heating of the particle filter (30), i.e. the regeneration, is activated depending on the degree of clogging of the filter (30) with particles.

14. The vehicle of at least one of claims 1 to 13,
characterized in that activation of the electric heating of the particle filter (30) is carried out by an electronic control (40).

15. The vehicle of claim 14,
characterized in that the electronic control (40) calculates and controls the necessary regeneration times and intervals on the basis of the recorded load collectives of the diesel engine (4).

16. The vehicle of claims 14 and 15,
characterized in that the counterpressure in the exhaust system of the diesel engine in the driving mode is used as control parameter for the electronic control (40) for activating the electric particle filter heating.

17. The vehicle of at least one of claims 14 to 16,
characterized in that the electronic control performs long-time monitoring of the regeneration times and intervals of the particle filter (30).

18. The vehicle of at least one of claims 14 to 17,
characterized in that the activation control (40) is integrated in the processor control (20) of the diesel-electric vehicle drive.

19. The vehicle of at least one of claims 1 to 18,
characterized in that the electric heating (36, 37) of the particle filter (30) is used as load element for the electric brake of the vehicle.

20. The vehicle of at least one of claims 1 to 19,
characterized in that the generator (6) is integrated directly to the diesel engine (4) and the moving member of the generator (6) is operated at the speed of the diesel engine.

21. The vehicle of at least one of claims 1 to 20,
characterized in that the driving motors (16, 18) are disposed in the wheel hub or in proximity to the wheels and the wheels are driven individually by one motor each.

22. The vehicle of any of claims 1 to 21,
characterized in that a control subdivides the regeneration phase of e.g. 10 minutes into such pieces that individual partial intervals of a regeneration phase coincide with one braking phase each.

## Revendications

1. Véhicule automobile, en particulier autobus urbain, équipé d'un ensemble moteur à combustion interne/générateur (2), d'une commande (20, 8) et d'un ou plusieurs moteurs électriques (16, 18), servant de moteurs de traction pour l'entraînement des roues (R, L) et pour fonctionner en générateur pendant les phases de freinage, le moteur à combustion interne étant réalisé sous la forme d'un moteur diesel (4), dans le courant de gaz d'échappement duquel est monté un filtre à particules (30), caractérisé par un dispositif de chauffage électrique de filtre à particules (22, 24, 36, 37, 40), conçu pour régénérer le filtre à particules (30), avec une ou plusieurs résistances électriques (36), dans lesquelles de l'énergie électrique produite pendant les phases de freinage peut être injectée.

2. Véhicule selon la revendication 1, caractérisé en ce que l'énergie électrique est prélevée sur le générateur (6) pendant le fonctionnement en roulage du véhicule, en vue de chauffer le filtre à particules.

3. Véhicule selon la revendication 1, caractérisé en ce que l'énergie électrique est prélevée sur le générateur (6) pendant que le véhicule est stationnaire, en vue de chauffer le filtre à particules (30).

4. Véhicule selon l'une des revendications 1 à 3, caractérisé par une soufflante électrique (42, 44) destinée à fournir de l'air frais au filtre à particules (30), pendant le chauffage électrique du filtre à particules.

5. Véhicule selon la revendication 4, caractérisé en ce que la soufflante électrique (42, 44) est alimentée est alimentée en énergie électrique par le générateur (6).

6. Véhicule selon l'une des revendications 1 à 5, caractérisé en ce que pendant une phase de freinage du véhicule et pendant le chauffage électrique du filtre à particules (30), le générateur fonctionnant en moteur entraîne le moteur diesel (4), le générateur (6) étant alimenté électriquement par le ou les moteurs de traction (16, 18) travaillant simultanément en générateur et le moteur diesel (4) générant alors sans apport de carburant, en fonctionnant comme compresseur d'air (9), la fourniture d'air destinée au filtre à particules (30).

7. Véhicule selon au moins l'une des revendications 1 à 6, caractérisé en ce que le chauffage électrique du filtre à particules (30) est effectué au moyen de barres ou de cartouches (36) de résistance électrique et/ou de réseau de résistance (37), intégrés dans le filtre.

8. Véhicule selon au moins l'une des revendications 1 à 7, caractérisé en ce que le dispositif de chauffage électrique du filtre à particules (30) est branché, au moyen de l'interrupteur de puissance (22), sur le tronçon de ligne électrique destiné aux un ou plusieurs moteurs de traction (16, 18).

9. Véhicule selon au moins l'une des revendications 1 à 8, caractérisé en ce que la puissance électrique de chauffage des résistances est régulée de façon électronique et la régulation électronique régulant la température dans le filtre (30), pendant la régénération, à des valeurs d'au moins 25°C au-dessus de la température d'allumage des particules absorbées dans le filtre et régulant simultanément à des valeurs d'au moins 50°C au-dessous de la température maximale admissible de fonctionnement du filtre (30).

10. Véhicule selon la revendication 9, caractérisé en ce qu'on utilise comme grandeur de commande pour la durée de régénération, c'est-à-dire le temps de chauffage du filtre à particules (30), l'état réel du filtre, déterminé par mesure de la contre-pression dans le système de gaz d'échappement du moteur diesel (4), pendant le processus de régénération.

11. Véhicule selon les revendications 9 et 10, caractérisé en ce que la régulation électronique de la puissance de chauffage régule la quantité d'air (9) guidée dans le filtre à particules (30) pendant le processus de régénération.

12. Véhicule selon au moins l'une des revendications 9 à 11, caractérisé en ce que la régulation électronique de la puissance de chauffage électrique est intégrée dans la commande par processeur (20) de l'entraînement diesel-électrique.

13. Véhicule selon au moins l'une des revendications 1 à 12, caractérisé en ce que le chauffage électrique du filtre à particules (30), c'est-à-dire la régénération, est activé en fonction du degré d'encrassement du filtre (30) par des particules.

14. Véhicule selon au moins l'une des revendications 1 à 13, caractérisé en ce que l'activation du chauffage électrique du filtre à particules (30) est effectuée au moyen d'une commande électronique (40).

15. Véhicule selon la revendication 14, caractérisé en ce que la commande électronique (40) calcule et commande les temps et les intervalles de régénération nécessaires, à partir des caractéristiques de charge ayant été enregistrées du moteur électrique (4).

16. Véhicule selon les revendications 14 et 15, caractérisé en qu'on utilise comme paramètre de commande de l'électronique (40), pour l'activation du chauffage électrique du filtre à particules, la contre-pression agissant dans le système de gaz d'échappement du moteur diesel, en fonctionnement en traction.

17. Véhicule selon au moins l'une des revendications 14 à 16, caractérisé en ce que la commande électronique surveille sur une longue durée les temps et les intervalles de régénération du filtre à particules (30).

18. Véhicule selon au moins l'une des revendications 14 à 17, caractérisé en que la commande d'activation (40) est intégrée dans la commande de processeur (20) de l'entraînement diesel-électrique du véhicule.

19. Véhicule selon au moins l'une des revendications 1 à 18, caractérisé en ce que le chauffage électrique (36, 37) du filtre à particules (30) est utilisé comme élément de charge pour le frein électrique du véhicule.

20. Véhicule selon au moins l'une des revendications 1 à 19, caractérisé en ce que le générateur (6) est directement intégré au moteur diesel (4) et le rotor du générateur (6) fonctionne à la vitesse de rotation du moteur diesel.

21. Véhicule selon au moins l'une des revendications 1 à 20, caractérisé en ce que les moteurs de traction (16, 18) sont disposés dans le moyeu de roue ou près de la roue et les roues sont entraînées individuellement chaque fois par un moteur.

22. Véhicule selon l'une des revendications 1 à 21, caractérisé en qu'une commande fractionne la phase de régéneration de, par exemple, 10 minutes, de manière que des intervalles partiels d'une phase de régénération coïncident chaque fois avec une phase de freinage.
